Europäisches Patentamt

European Patent Office

Office européen des brevets

(11) Veröffentlichungsnummer: **0 045 947**
**A1**

(12) ## EUROPÄISCHE PATENTANMELDUNG

(21) Anmeldenummer: 81106162.1

(22) Anmeldetag: 06.08.81

(51) Int. Cl.³: **F 24 C 3/00**
**B 60 H 1/22**

(30) Priorität: 07.08.80 DE 3029941

(43) Veröffentlichungstag der Anmeldung:
17.02.82 Patentblatt 82/7

(84) Benannte Vertragsstaaten:
BE FR GB IT NL SE

(71) Anmelder: Philipp Kreis GmbH & Co.
TRUMA-Gerätebau
Neumarkter Strasse 34-36
D-8000 München 80(DE)

(72) Erfinder: Kreiss, Philipp
Neumarkter Strasse 34
D-8000 München 80(DE)

(74) Vertreter: Hain, Leonhard, Dipl.-Ing.
Tal 18/IV
D-8000 München 2(DE)

(54) Raumheizgerät für Kleinräume mit Austrittsstutzen.

(57) Bei einem mit gasförmigen oder vergastem flüssigem Brennstoff befeuerten Raumheizgerät für Kleinräume, insbesondere für Wohnwagen ist am Ende eines abwärtsführenden Kanalteiles (8, 9) eines als Wärmetauschers ausgebildeten Verbrennungsgaskanales ein Austrittsstutzen (10) zum Anschluß eines Abgaskamines (11) vorgesehen. Dieser Austrittsstutzen (10) weist eine Kaminanschlußöffnung (30) auf, deren Mittelachse (31) in Strömungsrichtung ansteigt, so daß ein daran angebrachter Abgaskamin eine aufsteigende Lage einnimmt.

Fig. 1

EP 0 045 947 A1

Croydon Printing Company Ltd.

Anmelder: Philipp Kreis GmbH & Co. TRUMA-Gerätebau
Neumarkter Strasse 34-36, 8000 München 80

Titel: Raumheizgerät für Kleinräume mit Austrittsstutzen

Beschreibung

Die Erfindung betrifft ein mit gasförmigen oder vergastem flüssigem Brennstoff befeuertes Raumheizgerät
für Kleinräume, insbesondere für Wohnwagen, mit gegen
den zu beheizenden Raum abgeschlossenem Verbrennungsraum, an den sich ein als Wärmetauscher ausgebildeter
Verbrennungsgaskanal anschließt, der von der Brennkammer
aufwärts führt, in einen waagrechten Querkanal übergeht und mit einem abwärtsführenden Kanalteil endet,
an dessen Ende ein Austrittsstutzen ausgebildet ist.

Bei bekannten Raumheizgeräten (DE-PSs 14 54 295, 20
16 560) ist der Verbrennungsgaskanal in seiner ganzen
Länge einzügig ausgebildet. Ein mäanderförmig abwärtsführender Kanalteil setzt sich aus mehreren abwechselnd
senkrechten und waagrechten Abschnitten zusammen. Die
Seitenwände des Verbrennungsgaskanales bilden parallele,
jeweils in einer gemeinsamen Ebene liegende Flächen,
die außen in Strömungsrichtung der aufsteigenden Warmluft verlaufende Außenlamellen sowie innen ebenfalls
in Strömungsrichtung der Verbrennungsgase verlaufende
Innenlamellen aufweisen. Diese Heizgeräte bestehen aus
zwei längs einer Mittelebene verbundenen Formschalen.
Durch eine allmähliche oder stufenweise Verengung der

Kanalteile ist zwar die Unterbringung von mehreren waagrechten und vertikalen Kanalabschnitten unterhalb des Querkanales und damit eine Verlängerung des Verbrennungsgaskanales möglich, jedoch verhält sich die Verbrennungsgasströmung durch diesen schlangenförmig gewundenen Kanal recht störungsanfällig. Dieser Nachteil macht sich vor allem dann bemerkbar, wenn der Abgaskamin waagrecht oder nach unten durchhängend verlegt werden muß. Ein durchhängender Sack, der die Strömung der Angase stark beeinträchtigt, läßt sich im Abgaskamin dann nicht vermeiden, wenn dieser von einem flexiblen Schlauch gebildet ist. Eine weitere Beeinträchtigung der Abgasströmung erfolgt durch das sich an der tiefsten Stelle sammelnde Kondenswasser.

Der Erfindung liegt daher die Aufgabe zugrunde, ein Heizgerät mit einem Austrittsstutzen zu versehen, der die Führung eines Abgaskamines verbessert.

Zur Lösung dieser Aufgabe ist ein Heizgerät der eingangs genannten Art gemäß der Erfindung dadurch gekennzeichnet, daß der am Ende eines Fallschachtes ausgebildete Austrittsstutzen eine Kaminanschlußöffnung aufweist, deren Mittelachse in Strömungsrichtung ansteigt.

Durch die aufwärts geneigte Kaminanschlußöffnung wird ein daran angeschlossener Abgaskamin zwangsläufig mit Steigung nach oben verlegt, wodurch wiederum der Abzug der Abgase verbessert wird. Ist der Austrittsstutzen so tief wie möglich, zweckmäßig unmittelbar über dem Raumboden angeordnet, dann bleibt auch bei gedrängter Bauweise noch genügend Platz für einen merklichen Anstieg des Abgaskamines übrig. Dies tifft vor allem dann zu, wenn der abwärtsführende Kanalteil nur einen waagrechten Unterkanal aufweist. Auf diese Weise läßt sich zuverlässig die Bildung eines gefährlichen Wassersackes im Abgaskamin verhindern.

Besonders vorteilhaft ist es, wenn der Austrittsstutzen eine Einsteckmuffe bildet, die auch einem flexiblen Abgaskamin-Schlauch eine ansteigende Richtung aufzwingt.

Bei der erfindungsgemäßen Ausbildung des Heizgerätes mit aufwärts geneigtem Abgasstutzen wird sich das Kondenswasser, das nicht zu vermeiden ist, auf dem Boden des Fallschachtes sammeln. Zur Abführung dieses Kondenswassers ist in das Gehäuse des Heizgerätes, gegebenenfalls in eine oder beide Formschalen ein Ablaufkanal eingeformt, der direkt in den Lufteintrittsstutzen zum Verbrennungsraum führt. Das sofort nach seiner Bildung ablaufende Kondenswasser kann so nach unten durch den Raumboden austreten, ohne daß dadurch Störungen verursacht werden oder zusätzliche Einrichtungen zum Abführen dieser Flüssigkeit notwendig sind.

Die Erfindung wird nachfolgend anhand eines Heizgerätes, das einen waagrechten Querkanal und einen abwärtsführenden Unterkanal mit Fallschacht aufweist, näher beschrieben. Dieses Heizgerät ist in der Zeichnung schematisiert dargestellt. Es zeigen:

Fig. 1 eine Seitenansicht und
Fig. 2 einen Schnitt nach der Linie II-II der Fig. 1.

Das dargestellte Raumheizgerät umfaßt einen Verbennungsraum 1, in dem sich ein Brennersatz (nicht sichtbar) befindet. Durch ein Sichtfenster 2 können

4

die Brennerflammen beobachtet werden. An den Verbrennungsraum schließt sich ein aufwärtsführender Kanalteil 3
eines als Wärmetauscher dienenden Verbrennungsgaskanales an, der oben mittels eines Umlenkbogens 4 in
einen waagrechten Querkanal 5 übergeht. Ein weiterer
Umlenkbogen 6 führt in einen darunter ausgebildeten
Unterkanal 8, an den sich ein abwärtsgerichteter Fallschacht 9 direkt anschließt. Am Ende dieses Fallschachtes
ist ein Austrittsstutzen 10 für einen Kaminanschluß,
beispielsweise eben Kaminschlauch 11, vorgesehen.

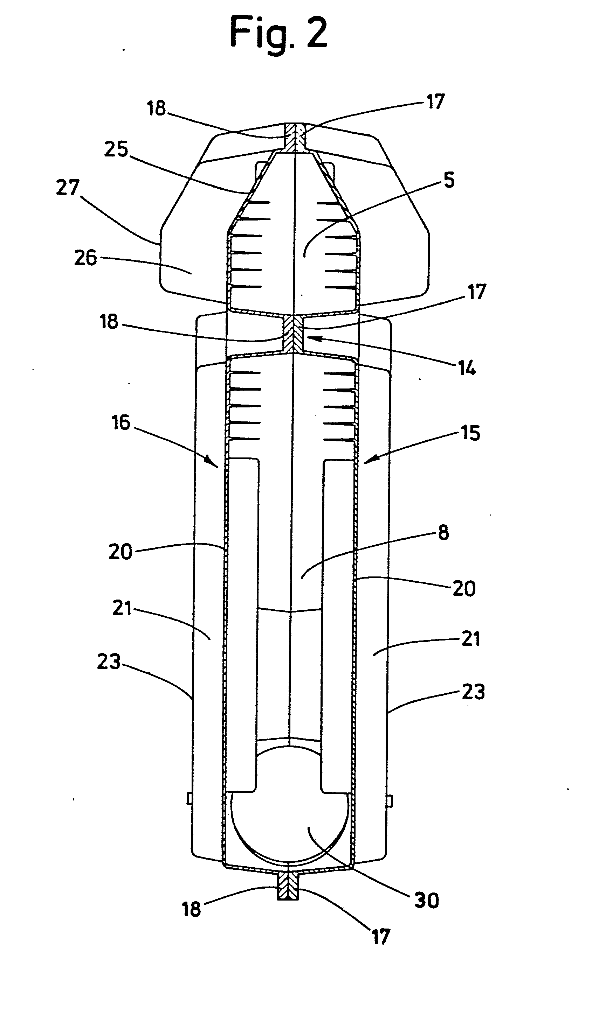

Dem dargestellten Heizgerät wird die Zuluft unterhalb des Brennersatzes durch einen Eintrittsstutzen
12, der unterhalb des Wohnraumes endet, zugeführt.
Die aufsteigenden Verbrennungsgase gelangen nach
dem Durchströmen des Verbrennungsgaskanales durch
den Austrittsstutzen in den Kaminschlauch 11 und
strömen meist über Dach aus. Die Strömungskanäle der
aneinander angrenzenden Kanalabschnitte sind voneinander
abgesetzt, so daß sich ihre Umfangswände nicht direkt
berühren. Jedoch hat sich eine wärmeleitende Verbindung
als zweckmäßig erwiesen, die von einem Zwischensteg
14 geschaffen wird. Besteht das Gerät aus zwei Formschalen 15, 16 (Fig.2), dann wird dieser Zwischensteg von Flanschfortsätzen 17, 18 gebildet.

An den abgeflachten und in einer Ebene liegenden
Seitenwänden 20 sämtlicher Kanalabschnitte des Verbrennungsgaskanales sowie des Verbrennungsraumes 1 sind
Außenlamellen 21, die in Richtung der am Heizgerät
hochsteigenden Warmluft verlaufen, vorgesehen. Aufeinander ausgerichtet bilden diese Lamellen Strömungsschächte 22 für die aufsteigende Luft. Die Außenlamellen an den aufwärts- und abwärtsführenden Kanalteilen stehen mit ihren Außenkanten 23 etwa 10 bis 15 mm von den Seitenwänden 20 ab. Der Querkanal 5, der beispielsweise eine satteldachförmige Deckenfläche 25 aufweist, trägt Großflächenlamellen 26 (Fig. 2), deren Außenkanten 27 wesentlich weiter als die Außenkanten 23 nach außen abstehen, zweckmäßig um das Zwei- bis Dreifache. Auf diese Weise entstehen am Querkanal überstehende Auftriebsschächte für außerhalb der unteren Außenlamellen hochsteigende Luftströme, die noch nicht merklich erwärmt sind und daher zusätzlich vom Querkanal Wärme aufnehmen.

Beim gezeigten Heizgerät ist die Querschnittsfläche B des Querkanales 5 gegenüber der Querschnittsfläche A des Verbrennungsraumes 1 verkleinert. Die Querschnittsfläche C am Eintritt in den Unterkanal 8, die im wesentlichen der Fläche B entspricht, ist gegenüber der Querschnittsfläche D erheblich kleiner, und zwar zweckmäßig um 30 bis 50%. Demgegenüber ist die Querschnittsfläche E des anschließenden Fallschachtes 9 wiederum beträchtlich reduziert. Durch die starke Erweiterung der Querschnittsfläche D des Unterkanales 8 wird in diesem Bereich vermehrt Wärme an die aufströmende Außenluft abgegeben, insbesondere weil die vergrößerten Seitenwände auch die Wärmeübergangsflächen vergrößern. Trotz der Verlangsamung der Gasströmung in diesem Unterkanal kommt es hier zu keinen Stauungen, weil die Zugwirkung des günstig verlegten Kamines die Verbrennungsgase in ausreichendem Maße abzieht. Da am erweiterten Unterkanal mit den vergrößerten Heizflächen eine gesteigerte Wärmeübertragung erreicht wird, kann auf weitere Umlenkungen und Querkanäle im abwärtsführenden Kanalteil verzichtet werden. Dadurch entsteht unterhalb des Unterkanales 8 ein größerer Freiraum, der eine aufsteigende Verlegung des Kaminschlauches 11 ermöglicht.

6

Um eine stets ansteigende und damit zugfördernde Verlegung des Kaminschlauches 11 zu gewährleisten, ist der Austrittsstutzen 10 mit seiner Anschlußöffnung 30 gegenüber der Waagrechten nach oben gerichtet, d.h. die Mittelachse 31 dieser Öffnung steigt in Strömungsrichtung an. Auf diese Weise wird verhindert, daß der meist flexible Kaminschlauch 11 eine die Strömung ungünstig beeinflussende Durchbiegung einnimmt. Die Schrägstellung der Öffnung ist dabei so angelegt, daß der ansteigende Kaminschlauch möglichst ohne Richtungsänderung bis zum äußeren Ende des Unterkanales geführt werden kann. Damit der Abgaskamin bzw. der Kaminschlauch 11 schon durch seine Befestigung die gewünschte Steigung erhält, bildet der Austrittsstutzen vorteilhaft eine Einsteckmuffe 29.

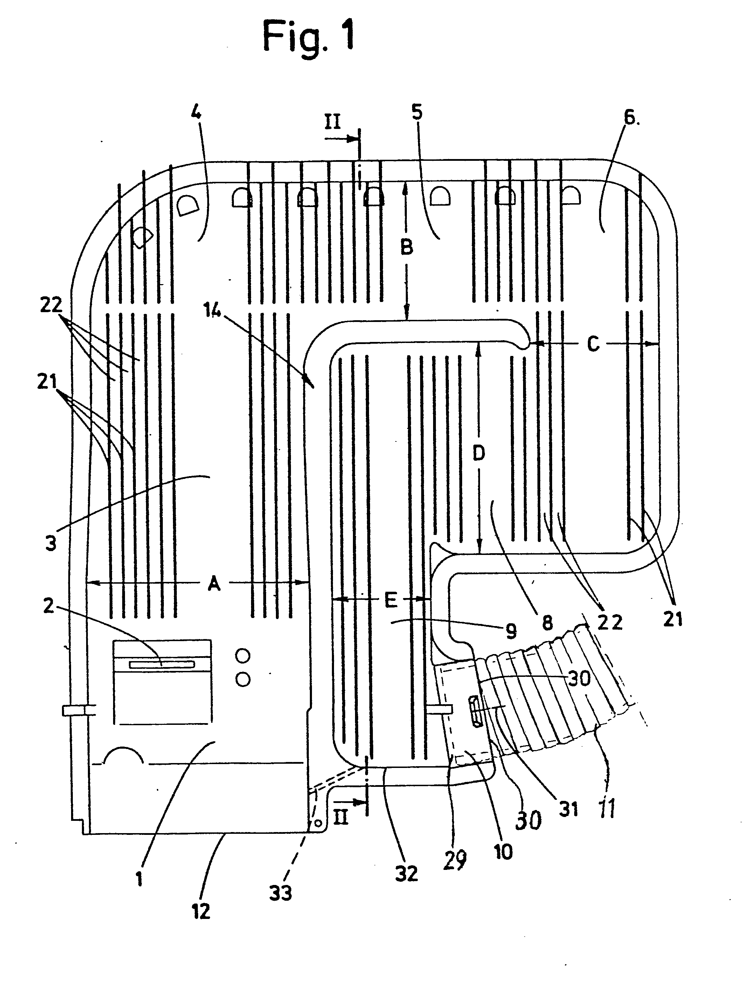

Zur Ableitung des sich auf dem Boden 32 des Fallschachtes 9 sammelnden Kondenswassers ist in einer oder beiden Formschalen ein Kondenswasser-Ablaufkanal 33 so eingeformt, daß er in den Lufteintrittsstutzen 12 einmündet (Fig. 1), und so auf kürzestem Wege das sich bildende Kondenswasser ins Freie abführt.

Die Erfindung beschränkt sich nicht auf das dargestellte Ausführungsbeispiel. Auch an einem Heizgerät mit anderen Kanalabschnitten und Kanalquerschnitten läßt sich der erfindungsgemäße Austrittsstutzen vorsehen, wobei ein ausreichender Kaminanstieg auch bei einem Heizgerät mit mehreren waagrechten und vertikalen Kanalabschnitten möglich ist.

Patentansprüche

1. Mit gasförmigem oder vergastem flüssigem Brennstoff befeuertes Raumheizgerät für Kleinräume, insbesondere für Wohnwagen, mit gegen den zu beheizenden Raum abgeschlossenem Verbrennungsraum (1), an den sich ein als Wärmetauscher ausgebildeter Verbrennungsgaskanal anschließt, der von der Brennkammer aufwärts führt, in einen waagrechten Querkanal (5) übergeht und mit einem abwärtsführenden Kanalteil (8, 9) endet, an dessen Ende ein Austrittsstutzen (10) ausgebildet ist, dadurch gekennzeichnet, daß der am Ende eines Fallschachtes (9) ausgebildete Austrittsstutzen (10) eine Kaminanschlußöffnung (30) aufweist, deren Mittelachse (31) in Strömungsrichtung ansteigt.

2. Heizgerät nach Anspruch 1, dadurch gekennzeichnet, daß der Austrittsstutzen (10) zu einer Einsteckmuffe (29) ausgebildet ist.

3. Heizgerät nach Anspruch 1 oder 2, dadurch gekennzeichnet, daß der Fallschacht (9) sich bis auf die Höhe einer am Verbrennungsraum (1) angebrachten Bodenbefestigung nach unten erstreckt.

4. Heizgerät nach einem der Ansprüche 1 bis 3, dadurch gekennzeichnet, daß der Austrittsstutzen (10) an einem direkt am einzigen Unterkanal (8) sich anschließenden Fallschacht (9) ausgebildet ist.

5. Heizgerät nach Anspruch 4, dadurch gekennzeichnet, daß der Austrittsstutzen (10) am Ende eines Fallschachtes (9) ausgebildet ist, der eine wesentlich kleinere Querschnittsfläche (E) als die Querschnittsfläche (D) des Unterkanals (8) aufweist.

8

6. Heizgerät nach einem der Ansprüche 1 bis 5, dadurch gekennzeichnet, daß ein vom Boden (32) des Fallschachtes (9) zur Lufteintrittsöffnung (12) des Verbrennungsraumes (1) reichender Kondenswasser-Ablaufkanal (33) ausgebildet ist.

Fig. 1

0045947

# Fig. 2

# 0045947

Nummer der Anmeldung

EP 81 10 6162

**Europäisches Patentamt**

## EUROPÄISCHER RECHERCHENBERICHT

| | EINSCHLÄGIGE DOKUMENTE | | | KLASSIFIKATION DER ANMELDUNG (Int. Cl.³) |
|---|---|---|---|---|
| Kategorie | Kennzeichnung des Dokuments mit Angabe, soweit erforderlich, der maßgeblichen Teile | betrifft Anspruch | | F 24 C 3/00 B 60 H 1/22 |
| | DE - A - 2 150 608 (KREIS) <br> * Seite 5, Zeilen 4-19; Figuren 1,3 * <br> -- | 1,2,6 | | |
| | US - A - 3 789 827 (KOLKKA) <br> * Spalte 4, Zeilen 14-18; Spalte 5, Zeilen 54-57; Figuren 2,4 * <br> -- | 1 | | |
| A | US - A - 3 662 735 (JACKSON) | | | **RECHERCHIERTE SACHGEBIETE (Int. Cl.³)** |
| A | US - A - 3 604 505 (BENRAAD) <br> ---- | | | F 24 C <br> F 24 H <br> B 60 H |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 19-11-1981 | VANHEUSDEN |

EPA form 1503.1   06.78